Europäisches Patentamt

European Patent Office

Office européen des brevets

(19)

(11) Veröffentlichungsnummer : **0 049 236**
**B1**

(12)

# EUROPÄISCHE PATENTSCHRIFT

(45) Veröffentlichungstag der Patentschrift :
05.06.85

(21) Anmeldenummer : 81890150.6

(22) Anmeldetag : 11.09.81

(51) Int. Cl.⁴ : **C 21 B 13/00**

(54) **Verfahren zur Behandlung von Eisenschwamm.**

(30) Priorität : 01.10.80 AT 4904/80

(43) Veröffentlichungstag der Anmeldung :
07.04.82 Patentblatt 82/14

(45) Bekanntmachung des Hinweises auf die Patenterteilung : 05.06.85 Patentblatt 85/23

(84) Benannte Vertragsstaaten :
DE FR SE

(56) Entgegenhaltungen :
AT-B-   350 600
DE-C- 1 228 425
GB-A-   833 016
US-A- 3 690 930
US-A- 4 075 370

(73) Patentinhaber : VOEST-ALPINE Aktiengesellschaft
Friedrichstrasse 4
A-1011 Wien (AT)

(72) Erfinder : Stift, Kurt Dipl.Ing.
Parkstrasse 16
A-8700 Leoben (AT)
Erfinder : Sulzbacher, Horst, Dipl.Ing.
Dirnböckweg 5
A-8700 Leoben (AT)
Erfinder : Salger, Günther
Gartenstrasse 3
A-8793 Trofaiach (AT)

(74) Vertreter : Kretschmer, Adolf, Dipl.-Ing. et al
Patentanwälte Dipl.Ing. A. Kretschmer Dr. Thomas M.
Haffner Schottengasse 3a
A-1014 Wien (AT)

# Beschreibung

Die Erfindung bezieht sich auf ein Verfahren zur Behandlung von porösen eisenhaltigen Teilchen, insbesondere Eisenschwamm, zum Verhindern der Reoxidation und/oder Korrosion bei Lagerung und Transport, bei welchem die Eisenschwammteilchen im Anschluß an die Eisenschwammherstellung in gebranntem Kalkstaub gerollt werden und hierauf mit einer Wassermenge befeuchtet werden, welche geringer ist als für die vollständige Hydratisierung des gebrannten Kalkes erforderlich ist. Ein derartiges Verfahren ist beispielsweise aus der AT-PS 350 600 bekannt geworden. Dieses bekannte Verfahren diente dazu, den Qualitätsverlust des metallisierten Produktes bei der Lagerung und beim Transport gering zu halten. Als Maßstab für die Qualität von Eisenschwamm wird der Metallisierungsgrad (Fe met.)/(Fe ges.) gewählt und es soll somit die Reoxidation des Eisenschwammes so gering wie möglich gehalten werden. Jedes Prozent Metallisierungsgradverlust ist mit einem Mehraufwand von etwa 15 KWh je Tonne Eisenschwamm verbunden, so daß durch die Qualitätsverbesserung des Eisenschwammes Energie gespart werden kann.

Es ist bekannt, daß ein aus Erzpellets über die Gasphase reduzierter Eisenschwamm einen sehr hohen Porenanteil aufweist und diese Poren auf Grund ihrer Kapillarwirkung eine rasche und starke Wasseraufnahme fördern. Untersuchungen zeigten, daß sich in Wasser getauchter Eisenschwamm innerhalb weniger Sekunden fast bis zur Sättigung, welche bei maximal 20 % liegen kann, vollsaugt. Eine kalkhaltige, an der Oberfläche aufgebrachte Schutzschicht verringert zwar die Wasseraufnahmefähigkeit und -geschwindigkeit, bewirkt aber bei langzeitiger Einwirkung von Wasser auf das Material keine deutliche Verbesserung.

Wasser ist in erster Linie im Zusammenhang mit Sauerstoff ein korrosions- und reoxidationsförderndes Medium. Durch das Aufbringen einer kalkhaltigen Schutzschicht wird die negative Wirkung des Wassers wohl eingeschränkt, aber es kann nicht verhindert werden, daß bei langzeitiger Lagerung des Eisenschwammes im Freien das Material durch atmosphärische Niederschläge einen Wassergehalt erreicht, der an die Sättigungsgrenze herankommt. Eine derartig hohe Wasseraufnahme bringt aber wiederum einen weiteren Mehraufwand und erhöhten Energieverbrauch beim Erschmelzen mit sich, wobei als richtwert für 1 % Feuchtigkeit je Tonne Einsatz eine Energieverbrauchssteigerung von 20 KWh anzusetzen ist. Diese Berechnung gilt beispielsweise für den Einsatz in Elektrolichtbogenöfen und führt bei nur 5 % Feuchtigkeit und einem Einsatzverhältnis von 50 % Schrott und 50 % Eisenschwamm zu einer Erhöhung des Energieverbrauches von über 10 %. Diese Berechnung berücksichtigt lediglich den Mehraufwand an Energie für die Hochtemperaturvergasung, wobei noch die Verluste, welche durch eine unvermeidliche Verlängerung der Schmelzdauer hervorgerufen werden, hinzuzurechnen sind.

Aus der GB-A 833 016 ist bereits bekannt geworden, reduzierte Eisenteilchen mit begleitender Gangart und Kalk zu agglomerieren, wobei zusätlich auf die Oberfläche dieser Agglomerate Kalkstein in fein verteilter Form aufgebracht wird. In diesem Zusammenhang wurde auch bereits vorgeschlagen, diesen zusätzlich aufzubringenden Kalkstein zur Verbesserung seiner Haftfähigkeit mit Wasser oder Ölen bzw. Ölderivaten zu imprägnieren.

Die Erfindung zielt nun darauf ab, ein Verfahren der eingangs genannten Art zu schaffen, mit welchem die Wasseraufnahmefähigkeit von porösen eisenhältigen Teilchen, insbesondere Eisenschwamm, weiter herabgesetzt werden kann. Zur Lösung dieser Aufgabe besteht die Erfindung im wesentlichen darin, daß hydrophobierende Zusätze anschließend an das Rollen in gebranntem Kalkstaub mit dem Löschwasser für die teilsweise Hydratisierung aufgebracht werden. Alternativ kann die Vorgangsweise hiebei so gewählt werden, daß hydrophobierende Zusätze auf eine erste teilsweise mit Wasser gelöschte Schicht aus gebranntem Kalk in Form einer zweiten mit Kalkstaub vermischen Beschichtung aufgebracht werden, worauf neuerlich teilweise hydratisiert wird. Als hydrophobierende Zusätze können hiebei beispielsweise Stearate, Oleate, Paraffine, Seifen, fett- und seifenhältige Abfallprodukte, zugesetzt werden, wobei besonders bevorzugt wasserlösliche Zusätze, wie Stearate, insbesondere Ammoniumstearate, Verwendung finden. durch die hydrophobierenden Zusätze kann ein Eindringen von Feuchtigkeit, insbesondere bei atmosphärischen Niederschlägen, weitgehend herabgesetzt werden, so daß mit der Verringerung der Feuchtigkeitsaufnahme auch die Gefahr einer Reoxidation der Eisenschwammteilchen vermindert wird. Es kann somit die Schichtstärke der Beschichtung gegenüber bekannten Verfahren verringert werden, wodurch das durch die Beschichtung geschaffene Fremdeinbringen verringert werden kann. Die hydrophobierenden Zusätze werden hiebei mit Kalk zu wasserabstoßenden Substanzen umgesetzt. Es ist somit nicht erforderlich, daß hydrophobe Substanzen in die Beschichtung eingearbeitet werden. Es kann vielmehr die Ausbildung solcher hydrophober Substanzen durch die Umsetzung von Zusätzen, welche bevorzugt wasserlöslich sein können, erfolgen. Die Zusätze werden hiebei dem Löschwasser für die teilweise Hydratisierung des gebrannten Kalkes und insbesondere in Form von wasserlöslichen Stearaten, wie beispielsweise Ammoniumstearat, dem Löschwasser zugesetzt. Ammoniumstearat setzt sich mit dem gebrannten Kalk zu wasserunlöslichem Kalziumstearat um und bildet einen wasserabweisenden Schutz für die Eisenschwammteilchen.

Unter hydrophobierenden Zusätzen sind erfindungsgemäß alle jene Materialien gemeint, welche wasserabstoßende Eigenschaften aufweisen oder im Zusammenhang mit Kalk wasserabstoßende Eigenschaften entwickeln. Im besonderen kommen hiefür Stearate, Oleate, Paraffine, Öle, Seifen, fett- und seifenhältige Abfallprodukte u. dgl. in Frage. Derartige Zusätze erlauben es, den bei den bekannten Verfahren üblichen Zusatz von Eisenoxyden, insbesondere LD-Staub, zur Verbesserung der Haftfähigkeit des Kalkstaubes teilweise oder vollständig zu ersetzen, da diesen Zusätzen gleichzeitig die Funktion eines Haftvermittlers zukommen kann. Da es sich bei den meisten dieser hydrophobierenden Zusätze um kohlenstoffhältige Materialien handelt, bringt ihr Einbringen in den Schmelzofen keine Nachteile in Bezug auf den Energieverbrauch mit sich.

Erfindungsgemäß werden die hydrophobierenden Zusätze in Mengen von 0,01-5 Gew.-%, bezogen auf das Gewicht der Beschichtung zugesetzt. Es hat sich gezeigt, daß eine Beschichtung, welche 2 bis 10, insbesondere 3 bis 6 Gew.-%, des Gewichtes der Eisenschwammteilchen ausmacht, ausreicht, um die Wasseraufnahmefähigkeit und die Geschwindigkeit der Wasseraufnahme um etwa 20 % zu senken. Durch hydrophobierende Zusätze kann die Wasseraufnahme vollständig unterbunden werden.

Die dem Löschwasser zugesetzten hydrophobierenden Substanzen können zusammen mit dem Löschwasser auf die Oberfläche der mit gebranntem Kalk beschichteten Teilchen aufgesprüht werden, wobei die Wassermenge in einem Ausmaß gewählt wird, welche eine unvollständige Hydratisierung des gebrannten Kalkes, insbesondere eine Hydratisierung von max. 80 %, ergibt.

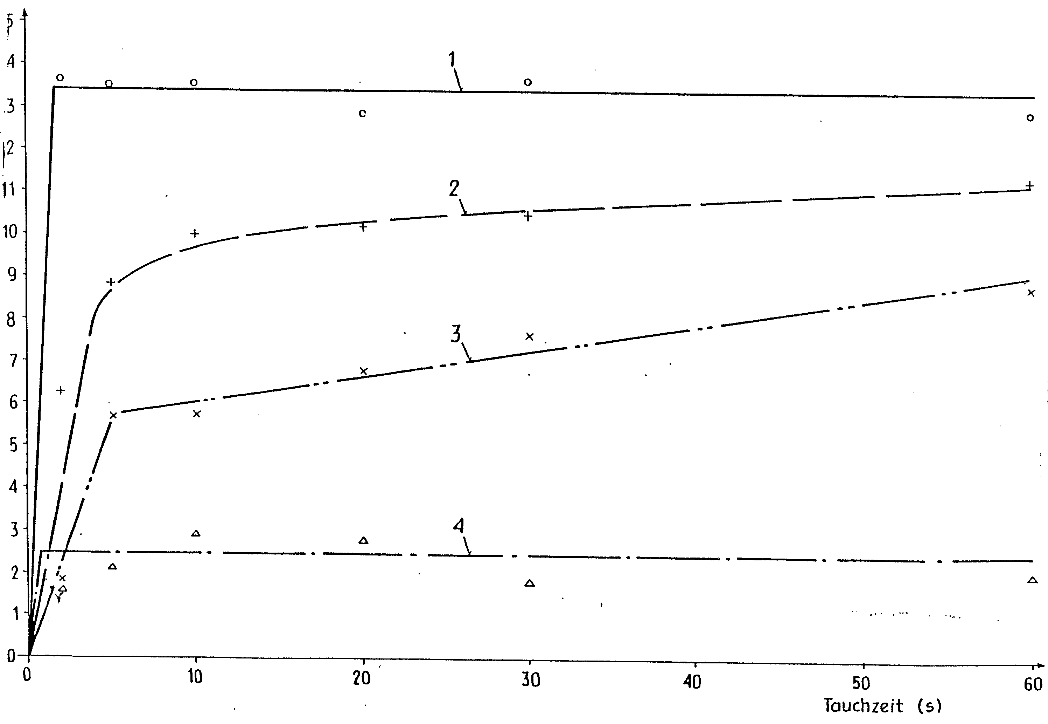

Die Erfindung wird an Hand der in der Zeichnung dargestellten Vergleichsversuche näher erläutert, welche die Wasseraufnahme in Prozent bei einer Tauchzeit von Eisenschwammteilchen (direktreduziertes Eisen-DRE) in Sekunden graphisch wiedergibt.

Die mit 1 bezeichnete Kurve stellt hiebei die Wasseraufnahme von unbehandeltem Eisenschwamm dar. Mit 2 ist der Verlauf der Wasseraufnahme von lediglich mit CaO beschichteten Eisenschwammteilchen wiedergegeben. Die Kurve 3 gibt den Verlauf der Wasseraufnahme eines erfindungsgemäß behandelten Eisenschwammteilchens wieder, welches mit Ammoniumstearat imprägniert wurde und ca. 0,25 % Ammoniumstearat im Kalkgemisch enthält.

Die Kurve 4 zeigt den Verlauf der Wasseraufnahme eines erfindungsgemäß beschichteten Teilchens mit 3 % Kalziumstearat im Kalkgemisch.

## Patentansprüche

1. Verfahren zur Behandlung von porösen eisenhaltigen Teilchen, insbesondere Eisenschwamm zum Verhindern der Reoxidation und /oder Korrosion bei Lagerung und Transport, bei welchem die Eisenschwammteilchen im Anschluß an die Eisenschwammherstellung in gebranntem Kalkstaub gerollt werden und hierauf mit einer Wassermenge befeuchtet werden, welche geringer ist als für die vollständige Hydratisierung des gebrannten Kalkes erforderlich ist, dadurch gekennzeichnet, daß hydrophobierende Zusätze anschließend an das Rollen in gebranntem Kalkstaub mit dem Löschwasser für die teilweise Hydratisierung aufgebracht werden.

2. Verfahren zur Behandlung von porösen eisenhaltigen Teilchen, insbesondere Eisenschwamm zum Verhindern der Reoxidation und /oder Korrosion bei Lagerung und Transport, bei welchem die Eisenschwammteilchen im Anschluß an die Eisenschwammherstellung in gebranntem Kalkstaub gerollt werden und hierauf mit einer Wassermenge befeuchtet werden, welche geringer ist als für die vollständige Hydratisierung des gebrannten Kalkes erforderlich ist, dadurch gekennzeichnet, daß hydrophobierende Zusätze auf eine erste teilweise mit Wasser gelöschte Schicht aus gebranntem Kalk in Form einer zweiten mit Kalkstaub vermischten Beschichtung aufgebracht werden, worauf neuerlich teilweise hydratisiert wird.

3. Verfahren nach Anspruch 1 oder 2, dadurch gekennzeichnet, daß wasserlösliche Zusätze, wie Stearate, insbesondere Ammoniumstearat, zugesetzt werden.

4. Verfahren nach einem der Ansprüche 1, 2 oder 3, dadurch gekennzeichnet, daß die hydrophobierenden Zusätze in Mengen von 0,01-5 Gew.-%, bezogen auf das Gewicht der Beschichtung, zugesetzt werden.

5. Verfahren nach einem der Ansprüche 1 bis 4, dadurch gekennzeichnet, daß das Gesamtgewicht der Beschichtung mit 0,5 bis 10 Gew.-%, vorzugsweise 2 bis 6 Gew.-%, bezogen auf das Gewicht des Eisenschwammes, gewählt wird.

## Claims

1. Process for treating porous iron-containing particles, in particular iron sponge for preventing reoxidation and/or corrosion on storage and transport, comprising rolling the iron sponge particles in calcined lime dust subsequently to the production of iron sponge and then humidifying said particles with an amount of water which is smaller than required for completely hydrating the calcined lime, characterised in that hydrophobing additives are applied with the slackening water for the partial hydration subsequently to the rolling in calcined lime dust.

2. Process for treating porous iron-containing particles, in particular iron sponge for preventing reoxidation and/or corrosion on storage and transport, comprising rolling the iron sponge particles in calcined lime dust subsequently to the production of iron sponge and then humidifying said particles with an amount of water which is smaller than required for completely hydrating the calcined lime, characterised in that hydrophobing additives are applied onto a first layer of calcined lime, partially slackened with water, in the form of a second layer mixed with lime dust, whereupon a further partial hydrating step is performed.

3. Process as claimed in claim 1 or 2, characterised in that water-soluble additives such as stearates, particularly ammonium stearate, are added.

4. Process as claimed in claim 1, 2 or 3, characterised in that the hydrophobing additives are added in an amount of 0.01 to 5 percent by weight of the coating.

5. Process as claimed in any one of claims 1 to 4, characterised in that the total weight of the coating is selected to be 0.5 to 10 percent, preferably 2 to 6 percent, by weight of the iron sponge.

**Revendications**

1. Procédé pour traiter des particules poreuses contenant du fer, et spécialement des particules d'éponge de fer, en vue d'en empêcher la ré-oxydation et/ou la corrosion en cours de stockage et de transport, procédé selon lequel on enrobe de chaux calcinée pulvérulente les particules d'éponge de fer après leur fabrication, et on les mouille ensuite, d'une quantité d'eau inférieure à celle qui est nécessaire pour une hydratation complète de la chaux calcinée ; ce procédé étant caractérisé en ce que, au cours de l'enrobage les particules avec de la chaux calcinée, on y introduit des additifs hydrofuges avec l'eau d'extinction prévue pour l'hydratation partielle.

2. Procédé pour traiter des particules poreuses contenant du fer, et spécialement des particules d'éponge de fer en vue d'en empêcher la réo-oxydation et/ou la corrosion en cours de stockage et de transport, ce procédé selon lequel on enrobe de chaux calcinée pulvérulente, les particules de fer en éponge après leur fabrication, et on les mouille ensuite d'une quantité d'eau inférieure à celle qui est nécessaire pour une hydratation complète de la chaux calcinée ; ce procédé étant caractérisé en ce qu'on applique aux particules des additifs hydrofuges, sur une première couche d'enrobage constituée de chaux calcinée partiellement éteinte à l'eau, en réalisant une deuxième couche d'enrobage, où les additifs précités sont mélangés à de la chaux pulvérisée ; après quoi on effectue à nouveau une hydratation partielle.

3. Procédé conforme à l'une des revendications 1 ou 2, caractérisé en ce qu'on utilise des additifs solubles dans l'eau, tels que des stéarates, et en particulier du stéarate d'ammonium.

4. Procédé conforme à l'une des revendications 1 à 3, caractérisé en ce qu'on emploie les additifs hydrofuges dans une proportion comprise entre 0,01 % et 5 %, par rapport au poids de la couche d'enrobage.

5. Procédé conforme à l'une des revendications 1 à 4, caractérisé en ce que, par rapport au poids du fer en éponge, le poids total de la couche d'enrobage est compris entre 0,5 % et 10 %, et de préférence entre 2 et 6 % du poids du fer.

**0 049 236**

Tauchzeit (s)